# FASCICULE DE BREVET EUROPEEN

(11) **EP 3 025 138 B1**
(45) Date de publication et mention de la délivrance du brevet: **27.09.2017**
(21) Numéro de dépôt: 14741903.0
(22) Date de dépôt: 23.07.2014
(51) Int. Cl.: G01M 17/02

(54) **DISPOSITIF D'ENTRAÎNEMENT EN ROTATION DESTINÉ À L'INSPECTION VISUELLE D'UN PNEUMATIQUE ET PROCÉDÉ ASSOCIÉ**
DREHBARE ANSTEUERUNGSVORRICHTUNG ZUR VISUELLEN PRÜFUNG EINES REIFENS UND ZUGEHÖRIGES VERFAHREN
ROTATABLY DRIVING DEVICE FOR THE VISUAL INSPECTION OF A TYRE AND ASSOCIATED METHOD

(30) Priorité: 25.07.2013 FR 1357358
(43) Date de publication de la demande: 01.06.2016
(73) Titulaire: Compagnie Générale des Etablissements Michelin, 63000 Clermont-Ferrand (FR)
(72) Inventeur: BOR, Gérard, F-63040 Clermont-Ferrand Cedex 09 (FR); JOLY, Alexandre, F-63040 Clermont-Ferrand Cedex 09 (FR)
(74) Mandataire: Roussy, Delphine
(86) Numéro de dépôt international: PCT/EP2014/065776
(87) Numéro de publication internationale: WO 2015/011171

(56) Documents cités:
- EP-A2- 1 122 530
- WO-A1-2011/113711
- DE-C- 824 747
- JP-A- 2011 237 258
- US-A- 1 503 935
- US-A- 3 554 310

## Description

La présente invention concerne le domaine du contrôle visuel des pneumatiques.

Plus particulièrement, l'invention concerne les dispositifs utilisés pour assurer l'entraînement en rotation des pneumatiques afin de réaliser des opérations de contrôle visuel des surfaces de ces derniers.

L'inspection visuelle est largement développée dans le processus de fabrication des pneumatiques et fait encore le plus souvent appel à la dextérité des opérateurs chargés de vérifier l'absence d'imperfections visibles à la surface des pneumatiques pour s'assurer de leur conformité.

Cependant, avec l'avancée de la puissance de calcul des moyens informatiques, les manufacturiers de pneumatiques cherchent à développer des moyens de contrôle automatique pour assister les opérateurs chargés du contrôle visuel. Dans ce but, il est possible d'utiliser un appareil d'inspection comprenant des moyens d'éclairage et des caméras disposés de sorte à balayer à la fois des zones extérieure et intérieure des bourrelets latéraux et de la bande de roulement du pneumatique à contrôler. Le champ de prise de vues de chaque caméra est limité angulairement. Pour obtenir des images complètes de l'intérieur et de l'extérieur du pneumatique, il convient d'entraîner en rotation le pneumatique autour de son axe par rapport aux moyens d'éclairage et aux caméras. Les images numériques obtenues sont alors traitées et comparées avec des images de référence afin de déterminer les éventuelles anomalies de surface et d'aspect du pneumatique. Pour plus de détails, on pourra par exemple se référer aux demandes de brevet EP-A2-1 959 227, EP-A1-2 023 078 et EP-A1-2 172 737.

Pour réaliser une telle inspection, il convient d'utiliser un dispositif assurant un centrage précis et l'entraînement en rotation du pneumatique. On connait, par le document US2008/0066532, un dispositif d'entraînement comprenant une pluralité de paires de crochets venant appuyer contre les faces internes des bourrelets latéraux du pneumatique de sorte à les écarter l'un relativement à l'autre. Les crochets sont mobiles entre une position d'engagement pour le maintien et l'entraînement en rotation du pneumatique et une position repliée pour permettre l'introduction et l'extraction du pneumatique.

Ce dispositif a pour inconvénient majeur de ne pas permettre la réalisation d'images des faces internes des bourrelets latéraux du pneumatique dans les zones d'appui des crochets. Ainsi, ces zones masquées ne peuvent pas être contrôlées sans avoir au préalable repositionné angulairement le pneumatique par rapport aux crochets.

Par ailleurs, les crochets peuvent déformer voire marquer localement les faces internes des bourrelets latéraux, ce qui fournit des indications erronées de l'état de surface du pneumatique.

On connaît, par exemple par le document JP 2011 237258 A, des dispositifs d'entraînement en rotation d'un pneumatique pour l'inspection de celui-ci. Ces dispositifs comprennent une courroie d'entraînement montée sur deux poulies, la courroie d'entraînement étant plaquée contre la bande de roulement du pneumatique. Une des poulies est entraînée en rotation par des moyens d'entraînement pour la mise en rotation de la courroie d'entraînement.

On connaît, par le document US 1 503 935 A, un dispositif d'entraînement en rotation d'un pneumatique de bicyclette. Le dispositif comprend un support et une courroie d'entraînement pourvue d'une face de contact avec une partie annulaire du pneumatique et apte à permettre un entraînement en rotation dudit pneumatique autour de son axe. Le dispositif comprend également une première poulie montée sur le support et disposée en appui contre la courroie d'entraînement du côté opposé à la face de contact pour le plaquage de ladite face de contact radialement contre la partie annulaire du pneumatique, et une deuxième poulie disposée en appui contre la face de contact de la courroie d'entraînement et montée sur le support pour écarter localement une partie de ladite face de contact de la partie annulaire du pneumatique, le reste de la face de contact étant plaqué contre ladite partie annulaire par la première poulie. Le dispositif comprend également des moyens d'entraînement en rotation de la deuxième poulie pour la mise en rotation de la courroie d'entraînement. La présente invention vise à remédier à ces inconvénients.

Plus particulièrement, la présente invention vise à prévoir un dispositif d'entraînement en rotation d'un pneumatique permettant de pouvoir faire des inspections visuelles sans avoir de zones masquées sur l'intérieur et/ou l'extérieur du pneumatique.

La présente invention vise également à prévoir un dispositif permettant d'obtenir un centrage précis et un entraînement en rotation sans glissement du pneumatique qui soit stable, précis et répétitif.

La présente invention vise encore à prévoir un dispositif permettant de conserver la géométrie du pneumatique lors de son entraînement en rotation. Un dispositif d'entraînement en rotation d'un pneumatique selon la présente invention comprend un support fixe, une courroie d'entraînement pourvue d'une face de contact avec une partie annulaire du pneumatique et apte à permettre un entraînement en rotation dudit pneumatique autour de son axe, et une pluralité de premières poulies montées sur le support et disposées en appui contre la courroie d'entraînement du côté opposé à la face de contact pour le plaquage de ladite face de contact radialement contre la partie annulaire du pneumatique. Le dispositif comprend en outre au moins une seconde poulie disposée en appui contre la face de contact de la courroie d'entraînement et montée mobile en translation sur le support pour écarter localement une partie de ladite face de contact de la partie annulaire du pneumatique, le reste de la face de contact étant plaqué contre ladite partie annulaire par les premières poulies; et des moyens d'entraînement en rotation d'au moins une des poulies pour la mise en rotation de la courroie d'entraînement.

Grâce au dispositif, on obtient la mise en tension de la courroie d'entraînement et son plaquage sur le pneumatique, ce qui permet d'assurer le centrage de ce dernier et son entraînement en rotation par adhérence sans glissement. La courroie permet de réaliser un entraînement du pneumatique stable et répétitif sans mouvement relatif perturbant. En outre, il n'existe aucun marquage ou détérioration de la surface du pneumatique par la courroie d'entraînement.

Par ailleurs, la disposition des poulies permet de dégager localement la face de contact de la courroie du pneumatique afin de ne pas avoir de zones masquées sur un secteur angulaire limité du pneumatique en vue d'une inspection visuelle.

De préférence, ladite seconde poulie est située dans un secteur angulaire délimité par deux premières poulies successives.

Avantageusement, le dispositif comprend en outre des moyens de maintien axial du pneumatique aptes à venir en appui axialement contre un des bourrelets latéraux dudit pneumatique.

La courroie d'entraînement peut comprendre un rebord d'appui prolongeant radialement la face de contact de ladite courroie et formant au moins en partie les moyens de maintien axial, ledit rebord étant apte à venir en appui contre la face interne ou externe dudit bourrelet latéral du pneumatique. Alternativement ou en combinaison, les moyens de maintien axial peuvent comprendre au moins un rouleau mobile par rapport au support fixe entre une position éloignée et une position rapprochée relativement au pneumatique dans laquelle ledit rouleau est apte à venir en appui contre la face interne dudit bourrelet latéral du pneumatique.

De préférence, chaque poulie est montée sur un arbre parallèle à l'axe de rotation du pneumatique. Ladite seconde poulie peut être mobile radialement en translation sur le support. Les premières poulies peuvent être montées mobiles en translation sur le support.

Dans un mode de réalisation, une face extérieure de la courroie d'entraînement forme la face de contact avec le pneumatique et est apte à venir radialement en contact contre l'alésage d'un des bourrelets latéraux dudit pneumatique. Ladite seconde poulie peut être décalée radialement vers l'intérieur par rapport aux premières poulies. Avantageusement, la face extérieure de la courroie d'entraînement peut présenter une forme tronconique en concordance de forme avec l'alésage dudit bourrelet latéral du pneumatique.

Dans un autre mode de réalisation, une face intérieure de la courroie d'entraînement forme la face de contact avec le pneumatique et est apte à venir radialement en contact contre la bande de roulement dudit pneumatique. Ladite seconde poulie peut être décalée radialement vers l'extérieur par rapport aux premières poulies. De préférence, le dispositif comprend également des moyens de centrage montés sur le support et aptes à venir radialement en appui contre l'alésage d'un des bourrelets latéraux du pneumatique.

L'invention concerne également un procédé d'inspection d'un pneumatique à l'aide d'un dispositif tel que défini précédemment, comprenant les étapes au cours desquelles on plaque la face de contact de la courroie d'entraînement radialement contre la partie annulaire du pneumatique à l'aide des premières poulies, on règle la position de la seconde poulie sur le support pour écarter localement la face de contact de la courroie d'entraînement de la partie annulaire du pneumatique à l'aide de la seconde poulie, on dispose des moyens d'acquisition d'images pour acquérir au moins une image d'une zone angulaire de la surface du pneumatique correspondant à la zone dans laquelle la face de contact de la courroie d'entraînement reste à distance du pneumatique, on entraîne en rotation au moins une des poulies pour la mise en rotation de la courroie d'entraînement et du pneumatique, et on réalise l'image de ladite surface du pneumatique.

La présente invention sera mieux comprise à la lecture de la description détaillée de modes de réalisation pris à titre d'exemples nullement limitatifs et illustrés par les dessins annexés sur lesquels :
- la figure 1 est une vue schématique en section d'un dispositif d'entraînement en rotation d'un pneumatique selon un premier exemple de réalisation de l'invention,
- la figure 2 est une vue en perspective du dispositif de la figure 1,
- la figure 3 est une vue partielle en perspective du dispositif de la figure 1,
- la figure 4 est une vue schématique en section d'un dispositif d'entraînement en rotation selon un deuxième exemple de réalisation de l'invention, et
- les figures 5 et 6 sont respectivement des vues schématiques en coupe et de face d'un dispositif d'entraînement en rotation selon un troisième exemple de réalisation de l'invention.

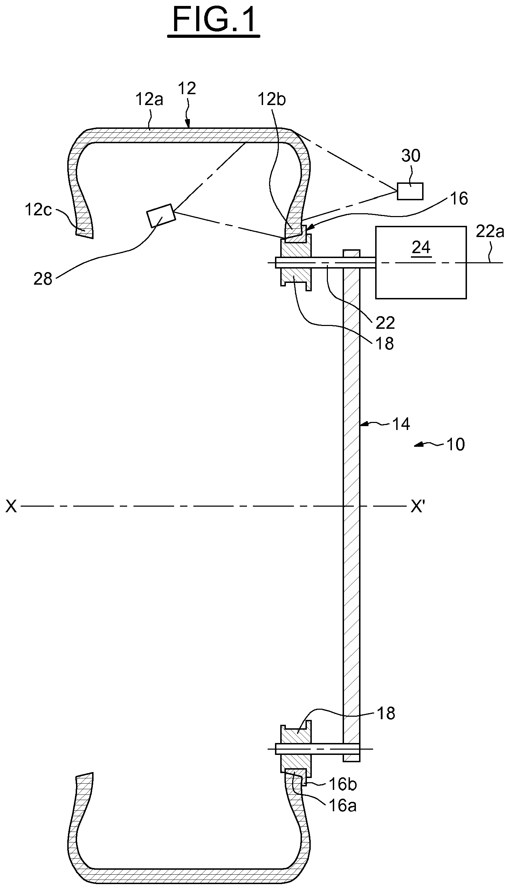

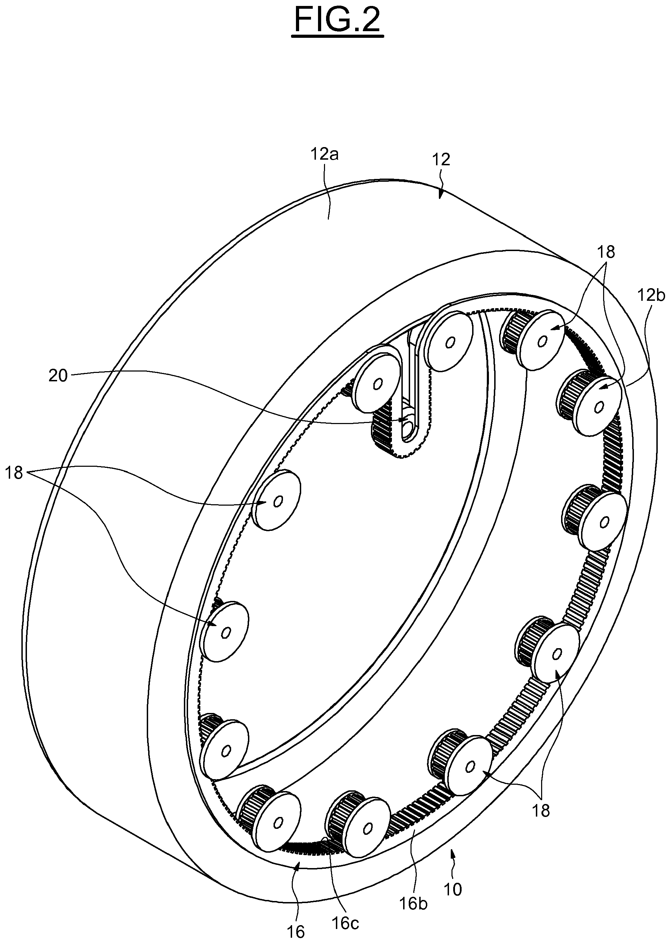

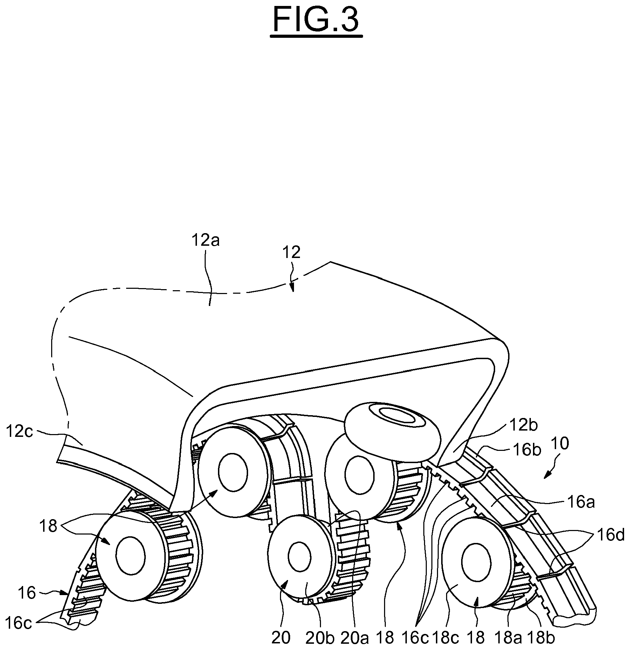

Sur les figures 1 à 3, on a représenté un exemple de réalisation d'un dispositif, référencé 10 dans son ensemble, prévu pour assurer le maintien et l'entraînement en rotation d'un pneumatique 12. Dans l'exemple de réalisation illustré, le pneumatique 12 est entraîné en rotation autour de son axe X-X' dans une position dudit axe supposée horizontale. Le pneumatique 12, de forme annulaire, comprend une bande de roulement 12a cylindrique prolongée à chaque extrémité par un flanc latéral comprenant un bourrelet 12b, 12c latéral.

Le dispositif 10 comprend un support 14 fixe, une courroie 16 d'entraînement en rotation du pneumatique 12 et une pluralité de poulies 18, 20 montées sur le support 14 et permettant le plaquage de la courroie d'entraînement sur le pneumatique et sa mise en tension comme cela sera décrit plus en détail par la suite.

La courroie 16 d'entraînement, de forme générale annulaire, comprend une partie de centrage 16a axiale montée radialement en appui contre l'alésage du bourrelet 12b latéral du pneumatique, et un rebord 16b radial prolongeant vers l'extérieur ladite partie de centrage. La partie de centrage 16a présente une face extérieure en contact et en concordance de forme avec l'alésage du bourrelet 12b latéral afin d'obtenir un bon centrage du pneumatique 12 sur la courroie 16 d'entraînement. La face extérieure de la partie de centrage 16a est tronconique. Le rebord 16b prolonge radialement vers l'extérieur une extrémité de cette face extérieure et vient axialement en appui contre la face externe du bourrelet 12b latéral du pneumatique. Le rebord 16b forme un moyen de maintien extérieur du bourrelet 12b.

La courroie 16 d'entraînement comprend également une face intérieure, opposée à la face extérieure, pourvue d'une pluralité de dents 16c faisant saillie et dirigées radialement vers l'intérieur. Les dents 16c sont réparties sur toute la longueur de la courroie en étant espacées de manière régulière les unes par rapport aux autres dans le sens circonférentiel. La courroie 16 d'entraînement comprend encore des entailles 16d ménagées sur toute la périphérie de la face extérieure de la portion de centrage 16a et du rebord 16b de sorte à accroître sa flexibilité. Dans l'exemple de réalisation illustré, la courroie 16 d'entraînement est réalisée en une seule pièce, par exemple en élastomère ou en matière thermoplastique. En variante, la courroie d'entraînement peut être réalisée en deux parties assemblées par tout moyen approprié, par exemple collage ou surmoulage, dans laquelle une première partie intérieure comprend les dents et une seconde partie extérieure vient en appui contre le pneumatique.

Les poulies 18 sont montées mobiles en translation sur le support 14 pour assurer le plaquage de la face extérieure de la courroie 16 d'entraînement contre l'alésage annulaire du bourrelet 12b latéral du pneumatique et la mise en tension de ladite courroie. Les poulies 18 sont identiques entre elles et montées mobiles par rapport au support 14 dans la direction radiale. Les poulies 18 sont contigües dans le sens circonférentiel et écartées les unes relativement aux autres avec un espacement constant. Dans l'exemple de réalisation illustré, les poulies 18 sont au nombre de douze.

Chaque poulie 18 est supportée par un arbre 22, d'axe 22a parallèle à l'axe X-X' du pneumatique, qui est lui-même monté coulissant sur le support 14 dans la direction radiale. A cet effet, une pluralité de cadres mobiles (non représentés) montés coulissants peut être prévue sur le support 14 pour le montage des arbres 22. Chaque poulie 18 comprend, sur sa surface extérieure, une pluralité de dents 18a prévues pour engrener avec les dents 16c de la courroie d'entraînement et deux flasques 18b, 18c d'extrémité opposés pour le guidage de ladite courroie. Le flasque d'extrémité 18b vient axialement en appui contre le rebord 16b de la courroie d'entraînement axialement du côté opposé au bourrelet 12b latéral du pneumatique et le flasque d'extrémité 18c vient axialement en appui contre l'extrémité libre de la partie de centrage 16a de la courroie.

Afin d'obtenir la mise en rotation de la courroie 16 d'entraînement, le dispositif 10 comprend également un moteur 24 électrique associé à l'une des poulies 18. Pour cette poulie 18, l'arbre tournant du moteur 24 forme l'arbre 22 sur lequel est fixée ladite poulie. Les autres poulies 18 sont montées libres en rotation sur les arbres 22 autour de leurs axes respectifs orientés dans la direction axiale de sorte à pouvoir être entraînées par la courroie 16 d'entraînement. Dans l'exemple de réalisation illustré, il est prévu un seul moteur électrique pour l'entraînement en rotation de la poulie 18 associée et de la courroie 16. En variante, il est possible de prévoir des moyens d'entraînement en rotation pour plusieurs poulies 18, voire pour l'ensemble de ces poulies.

La poulie 20 est supportée par un arbre (non représenté), d'axe parallèle à l'axe X-X' du pneumatique, monté coulissant sur le support 14 dans la direction radiale. De façon similaire aux poulies 18, un cadre monté coulissant peut être prévu sur le support 14 pour le montage de l'arbre de support de la poulie 20. La poulie 20 est fixée sur l'arbre. La poulie 20 comprend une surface extérieure 20a lisse montée radialement en appui contre la face extérieure de la courroie 16 d'entraînement et un flasque 20b d'extrémité venant en appui axialement contre l'extrémité libre de la partie de centrage 16a de la courroie. La poulie 20 est décalée radialement vers l'intérieur par rapport aux poulies 18. La poulie 20 est située dans un secteur angulaire délimité par deux poulies 18 successives. La poulie 20 est disposée dans le sens circonférentiel entre deux poulies 18 en étant décalée en direction de l'axe X-X' du pneumatique par rapport auxdites poulies 18. Compte tenu de la disposition radiale relative entre les poulies 18 en appui contre la face intérieure de la courroie 16 d'entraînement et la poulie 20 en appui contre la face extérieure de ladite courroie, une portion de la courroie est située radialement à distance de l'alésage du bourrelet 12b latéral du pneumatique, le reste de la courroie étant plaqué radialement contre ledit alésage.

Le dispositif 10 comprend également une pluralité de rouleaux 26 de maintien intérieur montés libres en rotation autour de leurs axes respectifs orientés dans la direction radiale. Les rouleaux 26 de maintien sont identiques entre eux et espacés de manière régulière les uns par rapport aux autres dans le sens circonférentiel. Les rouleaux 26 sont montés de façon mobile radialement sur le support 14 entre une position escamotée dans laquelle ils sont ramenés radialement vers l'axe X-X' de manière à autoriser le montage ou l'extraction du pneumatique 12 et une position déployée telle que cela est illustré sur les figures dans laquelle ils viennent en contact axialement contre la face interne du bourrelet 12b latéral du pneumatique. Chaque rouleau 26 est monté sur un arbre (non représenté) s'étendant radialement qui est lui-même supporté par un arbre (non représenté) monté coulissant sur le support 14 dans la direction radiale. Dans ce but, un cadre mobile (non représenté) monté coulissant peut être prévu sur le support 14. Les rouleaux 26 permettent d'obtenir de façon sûre et précise le coincement du bourrelet 12b latéral du pneumatique sur la face extérieure de la courroie 16 d'entraînement et son plaquage contre le rebord 16b de la courroie. Les rouleaux 26 et le rebord forment des moyens de maintien latéral du bourrelet 12b du pneumatique. Avantageusement, les rouleaux 26 comprennent sur leur surface extérieure un revêtement réalisé en matière élastique souple afin de ne pas marquer le pneumatique 12 et de pouvoir être associés à des bourrelets latéraux présentant différentes formes.

Comme cela sera décrit par la suite, le dispositif 10 comprend encore des premiers et seconds moyens d'acquisition 28, 30 d'images pour l'inspection visuelle du pneumatique. Chaque moyen d'acquisition 28, 30 peut comprendre un moyen d'éclairage de type laser ou lumière de fente formant une raie de lumière, et une ou plusieurs caméras aptes à capter la lumière réfléchie par le pneumatique 12.

Pour réaliser l'inspection du pneumatique 12 à l'aide du dispositif 10, on procède de la manière suivante. Dans une première étape, on déplace les poulies 18 supportant la courroie 16 d'entraînement vers l'extérieur en direction du pneumatique 12 jusqu'à venir plaquer radialement la face extérieure de la courroie contre l'alésage du bourrelet 12b latéral du pneumatique. Le rebord 16b de la courroie est axialement en appui contre la face externe du bourrelet 12b. Le pneumatique 12 est alors supporté par les poulies 18 qui sont situées sur un même diamètre. Cette étape permet de mettre en tension la courroie 16 d'entraînement et de l'amener au diamètre de centrage du pneumatique 12.

Ensuite, lors d'une seconde étape, on déplace la poulie 20 vers l'intérieur de sorte à tendre encore la courroie 16 d'entraînement et à écarter localement la face extérieure de la courroie de l'alésage du bourrelet 12b latéral du pneumatique. La poulie 20 est décalée radialement vers l'intérieur en direction de l'axe X-X' du pneumatique par rapport aux poulies 18. La poulie 20 forme une poulie de renvoi. La majeure partie de la courroie 16 d'entraînement est située radialement entre les poulies 18 et le pneumatique 12 hormis dans la zone de la poulie 20 dans laquelle ladite poulie est située radialement entre la courroie 16 et le pneumatique. Lors d'une troisième étape, on déploie radialement les rouleaux 26 de sorte à les amener axialement en contact contre la face interne du bourrelet 12b latéral du pneumatique.

Ensuite, lors d'une quatrième étape, les premiers moyens d'acquisition 28 d'images sont introduits à l'intérieur du pneumatique 12 pour acquérir une image d'une zone angulaire d'angle prédéterminé de la surface interne du pneumatique qui correspond à la zone dans laquelle la face extérieure de la courroie 16 d'entraînement reste à distance du pneumatique. De préférence, le champ de prises de vues est centré sensiblement sur le secteur angulaire formé par les deux poulies 18 successives entre lesquelles est située la poulie 20. La surface interne du bourrelet 12b latéral et de la bande de roulement 12a du pneumatique peut ainsi être inspectée sans avoir des zones masquées dans le champ de prises de vues des moyens d'acquisition 28. Les seconds moyens d'acquisition 30 d'images sont également disposés à l'extérieur du pneumatique 12 pour acquérir une image d'une zone angulaire de la surface externe du bourrelet 12b latéral et de la bande de roulement 12a du pneumatique.

Enfin, lors d'une cinquième et dernière étape, on actionne le moteur 24 électrique pour la mise en rotation de la poulie 18 associée qui entraîne par engrènement la courroie 16. Les autres poulies 20 sont entrainées en rotation par engrènement par la courroie 16. Le pneumatique 12 est alors entraîné par la courroie 16 en rotation autour de son axe X-X' par adhérence et sans glissement. On fait effectuer au pneumatique 12 une rotation de 360 degrés afin que les moyens d'acquisition 28, 30 d'images acquièrent l'ensemble des images permettant de former l'image complète des surfaces interne et externe du bourrelet 12b latéral et de la bande de roulement 12a du pneumatique.

Dans l'exemple de réalisation illustré, un seul dispositif 10 est utilisé pour le maintien et l'entraînement en rotation du pneumatique 12. Il est également possible de prévoir un second dispositif identique associé au bourrelet 12c latéral du pneumatique pour le maintien de ce bourrelet, voire pour écarter les deux bourrelets du pneumatique axialement l'un de l'autre. Il peut également être prévu des moyens d'acquisition d'images à l'intérieur et à l'extérieur du pneumatique 12 pour acquérir des images des surfaces interne et externe du bourrelet 12c latéral du pneumatique.

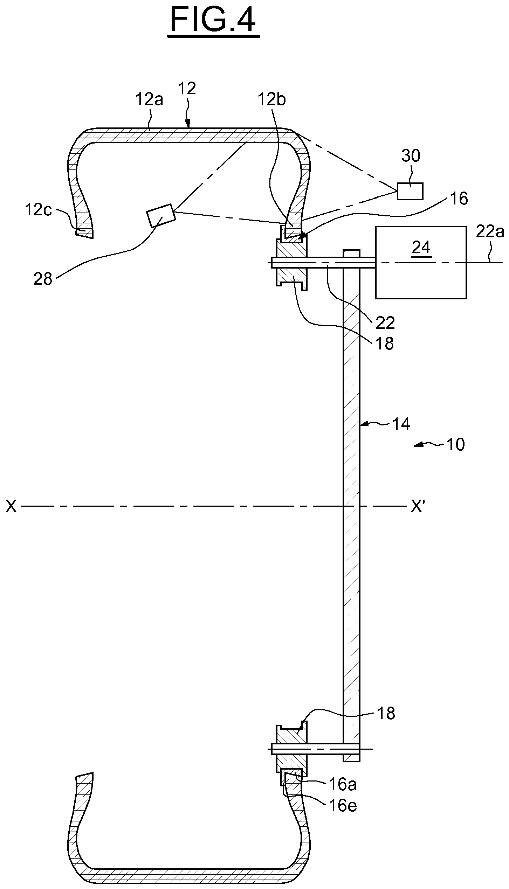

L'exemple de réalisation illustré à la figure 4, sur laquelle les éléments identiques portent les mêmes références, diffère du premier exemple de réalisation en ce que la courroie 16 d'entraînement comprend un rebord 16e radial prolongeant vers l'extérieur une extrémité de la face extérieure de la partie de centrage 16a pour venir axialement en appui contre la face interne du bourrelet 12b latéral du pneumatique. Par rapport au premier exemple de réalisation illustré, la disposition axiale du rebord est inversée. Cette disposition permet de maintenir le bourrelet 12b latéral du côté intérieur du pneumatique et d'écarter si besoin le bourrelet axialement vers l'extérieur pour favoriser l'inspection intérieure.

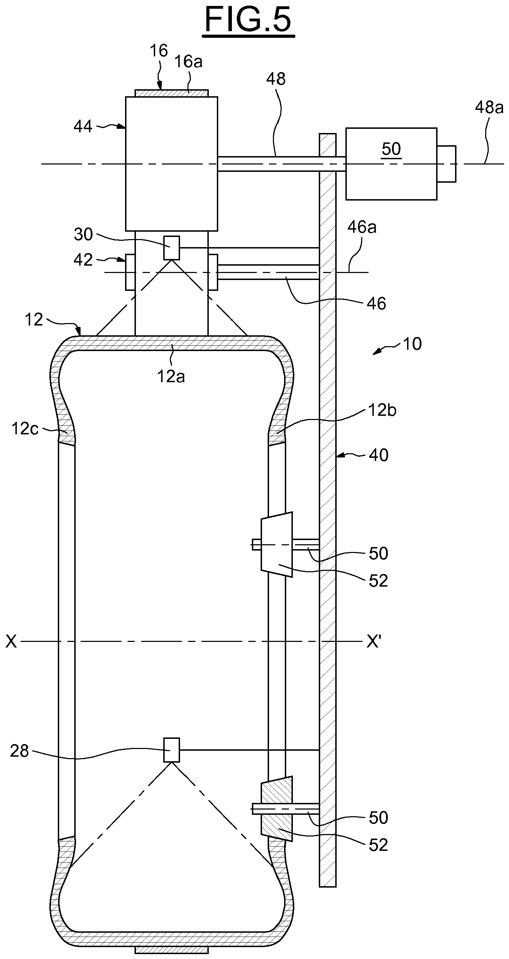

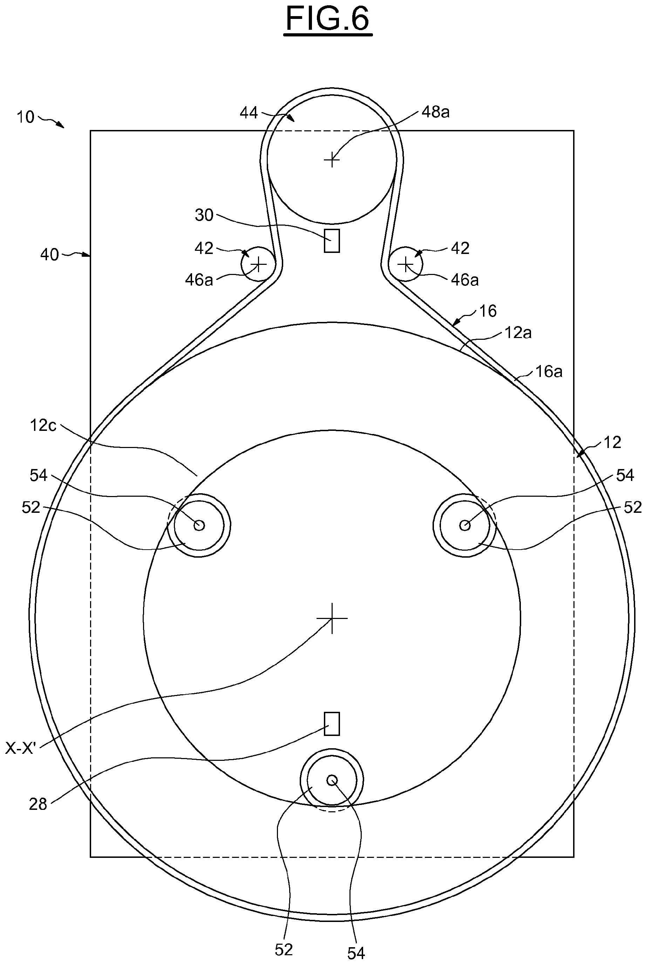

Dans les deux exemples de réalisation précédemment illustrés, la courroie 16 est disposée du côté intérieur du pneumatique 12. Dans une autre forme de réalisation, il est possible de prévoir une disposition radiale inversée de la courroie 16 relativement au pneumatique 12 de sorte que celle-ci entraîne par friction le pneumatique par le côté extérieur comme cela est représenté dans l'exemple de réalisation illustré aux figures 5 et 6.

Le dispositif 10 tel qu'illustré sur les figures 5 et 6 est représenté dans une position dans laquelle la courroie 16 entraîne en rotation le pneumatique 12 autour de son axe X-X' d'orientation horizontale. Le dispositif 10 comprend un support 40 fixe et trois poulies 42, 44 montées sur le support 40 et permettant le plaquage de la courroie d'entraînement sur le pneumatique et sa mise en tension.

Les deux poulies 42 sont prévues pour assurer le plaquage de la face intérieure de la courroie 16 d'entraînement contre la face extérieure de la bande de roulement 12a du pneumatique et la mise en tension de ladite courroie. Les poulies 42 sont identiques entre elles et montées chacune sur un arbre 46, d'axe 46a parallèle à l'axe X-X' du pneumatique, fixé sur le support 40. En variante, il est possible de prévoir un montage coulissant, par exemple selon la direction radiale, des poulies 42 sur le support 40. Les poulies 42 sont fixes en rotation par rapport à leurs axes respectifs orientés dans la direction axiale. Les poulies 42 sont montées sur le support 40 sur un même diamètre. Chaque poulie 42 comprend une surface extérieure lisse montée radialement en appui contre la face extérieure de la courroie 16 d'entraînement. Dans l'exemple de réalisation illustré, la courroie 16 est constituée de la partie de centrage 16a axiale.

La poulie 44 est montée sur l'arbre tournant 48 d'un moteur 50 électrique disposé sur le support 40. Le moteur 50 est monté coulissant sur le support 40 dans la direction radiale. A cet effet, un cadre mobile (non représenté) monté coulissant peut être prévu sur le support 40. L'axe 48a de l'arbre du moteur est parallèle avec l'axe X-X' du pneumatique. La poulie 44 motrice comprend, sur sa surface extérieure, une pluralité de dents prévues pour engrener avec les dents de la face intérieure de la courroie 16 d'entraînement. La poulie 44 est décalée radialement vers l'extérieur par rapport aux poulies 42. La poulie 44 est disposée dans le sens circonférentiel entre les poulies 42. La poulie 44 est située dans un secteur angulaire délimité par les deux poulies 42. Compte tenu de la disposition radiale relative entre les poulies 42 en appui contre la face extérieure de la courroie 16 d'entraînement et la poulie 44 en appui contre la face intérieure de ladite courroie, une partie de la courroie 16 est située radialement à distance de la face extérieure de la bande de roulement 12a du pneumatique, le reste de la courroie étant plaqué radialement contre ladite face.

Le dispositif 10 comprend également des moyens de centrage 52, ici au nombre de trois, fixés sur le support 40 et venant radialement en appui contre l'alésage du bourrelet 12b latéral du pneumatique. Les moyens de centrage sont identiques entre eux et montés chacun sur un arbre 54 s'étendant axialement et fixé sur le support 40. Dans cet exemple de réalisation, les moyens d'acquisition 28, 30 sont fixés sur le support 40.

Pour procéder au montage du pneumatique 12 sur le dispositif, on introduit le pneumatique à l'intérieur de la courroie 16, puis on déplace la poulie 44 vers l'extérieur de sorte à obtenir conjointement avec les poulies 42 le plaquage de la face intérieure de la courroie 16 d'entraînement radialement contre la bande de roulement 12a du pneumatique. La courroie 16 ceinture le pneumatique 12. La courroie 16 enveloppe le pneumatique 12. Lors du déplacement de poulie 44, on obtient également la mise en tension de la courroie. Pour faciliter l'introduction et la sortie du pneumatique 12 de la courroie 16 d'entraînement, celle-ci peut comprendre des éléments réalisés en matière métallique et noyés pour pouvoir déformer la courroie par utilisation d'électro-aimants. Il est également possible de prévoir une courroie avec une forme extérieure qui est adaptée pour faciliter l'accrochage en vue de sa déformation manuelle ou mécanique, par exemple une forme en I.

Le dispositif de cet exemple de réalisation a pour avantage de présenter une conception simplifiée et plus économique ainsi qu'une plus grande adaptabilité à différentes tailles de pneumatique. Dans cet exemple de réalisation, la face intérieure de la courroie 16 d'entraînement est munie des dents d'engrènement venant radialement en contact contre la bande de roulement 12a du pneumatique. Alternativement, il est possible de prévoir les dents sur la face extérieure de la courroie 16, la face intérieure étant lisse. Dans ce cas, les poulies 42 comprennent des dents d'engrènement et au moins l'une des deux est motrice, et la poulie 44 comprend une surface extérieure lisse.

Dans l'ensemble des exemples de réalisation illustrés, les dispositifs permettant d'assurer le maintien et l'entraînement en rotation du pneumatique 12 sont disposés selon une orientation à axe horizontal. Chaque dispositif peut également être utilisé selon une orientation à axe vertical ou à axe oblique.

Grâce à l'invention, on dispose d'un dispositif comprenant des premières poulies en appui contre la courroie d'entraînement du côté opposé à la face de contact intérieure ou extérieure avec le pneumatique et au moins une seconde poulie en appui contre ladite face de contact et décalée radialement par rapport aux premières poulies de sorte à dévier localement la courroie pour qu'une partie de celle-ci laisse entièrement libre le pneumatique sur un secteur angulaire limité. Le montage mobile en translation de la seconde poulie permet notamment d'obtenir le réglage de la tension de la courroie d'entraînement. Ceci assure également l'adaptabilité du dispositif à différentes tailles de pneumatique. De sorte à obtenir encore une plus grande adaptabilité, il est possible de prévoir plusieurs secondes poulies disposées de préférence de manière régulière dans le sens circonférentiel. Par ailleurs, l'utilisation d'une courroie permet le centrage et l'entraînement en rotation du pneumatique par adhérence, sans marquage en surface, et de façon stable sans mouvement perturbant entre ces deux éléments afin de pouvoir réaliser des images précises du pneumatique.

## Revendications

1. Dispositif d'entraînement en rotation d'un pneumatique, comprenant :
- un support (14 ; 40) fixe,
- une courroie d'entraînement (16) pourvue d'une face de contact avec une partie annulaire du pneumatique et apte à permettre un entraînement en rotation dudit pneumatique autour de son axe,
- une pluralité de premières poulies (18 ; 42) montées sur le support (14) et disposées en appui contre la courroie d'entraînement du côté opposé à la face de contact pour le plaquage de ladite face de contact radialement contre la partie annulaire du pneumatique, **caractérisé en ce qu'**il comprend :
- au moins une seconde poulie (20 ; 44) disposée en appui contre la face de contact de la courroie d'entraînement et montée mobile en translation sur le support (14 ; 40) pour écarter localement une partie de ladite face de contact de la partie annulaire du pneumatique, le reste de la face de contact étant plaqué contre ladite partie annulaire par les premières poulies, et
- des moyens d'entraînement (24 ; 50) en rotation d'au moins une des poulies pour la mise en rotation de la courroie d'entraînement.

2. Dispositif selon la revendication 1, dans lequel ladite seconde poulie (20 ; 44) est située dans un secteur angulaire délimité par deux premières poulies (18 ; 42) successives.

3. Dispositif selon la revendication 1 ou 2, comprenant en outre des moyens de maintien axial du pneumatique aptes à venir en appui axialement contre un des bourrelets latéraux dudit pneumatique.

4. Dispositif selon la revendication 3, dans lequel la courroie d'entraînement comprend un rebord (16b, 16c) d'appui prolongeant radialement la face de contact de ladite courroie et formant au moins en partie les moyens de maintien axial, ledit rebord étant apte à venir en appui contre la face externe ou interne dudit bourrelet latéral du pneumatique.

5. Dispositif selon la revendication 3 ou 4, dans lequel les moyens de maintien axial comprennent au moins un rouleau (26) mobile par rapport au support fixe entre une position éloignée et une position rapprochée relativement au pneumatique dans laquelle ledit rouleau est apte à venir en appui contre la face interne dudit bourrelet latéral du pneumatique.

6. Dispositif selon l'une quelconque des revendications précédentes, dans lequel chaque poulie (18, 20 ; 42, 44) est montée sur un arbre d'axe parallèle à l'axe de rotation du pneumatique.

7. Dispositif selon l'une quelconque des revendications précédentes, dans lequel ladite seconde poulie (20 ; 44) est mobile radialement en translation sur le support.

8. Dispositif selon l'une quelconque des revendications précédentes, dans lequel les premières poulies (18 ; 42) sont montées mobiles en translation sur le support.

9. Dispositif selon l'une quelconque des revendications précédentes, dans lequel une face extérieure de la courroie d'entraînement (16) forme la face de contact avec le pneumatique et est apte à venir radialement en contact contre l'alésage d'un des bourrelets latéraux dudit pneumatique.

10. Dispositif selon la revendication 9, dans lequel ladite seconde poulie (20) est décalée radialement vers l'intérieur par rapport aux premières poulies (18).

11. Dispositif selon la revendication 9 ou 10, dans lequel la face extérieure de la courroie d'entraînement présente une forme tronconique en concordance de forme avec l'alésage dudit bourrelet latéral du pneumatique.

12. Dispositif selon l'une quelconque des revendications 1 à 8, dans lequel une face intérieure de la courroie d'entraînement (16) forme la face de contact avec le pneumatique et est apte à venir radialement en contact contre la bande de roulement dudit pneumatique.

13. Dispositif selon la revendication 12, dans lequel ladite seconde poulie (20) est décalée radialement vers l'extérieur par rapport aux premières poulies (18).

14. Dispositif selon la revendication 12 ou 13, comprenant des moyens de centrage (52) montés sur le support et aptes à venir radialement en appui contre l'alésage d'un des bourrelets latéraux du pneumatique.

15. Procédé d'inspection d'un pneumatique à l'aide d'un dispositif selon l'une quelconque des revendications 1 à 14, comprenant les étapes au cours desquelles on plaque la face de contact de la courroie d'entraînement radialement contre la partie annulaire du pneumatique à l'aide des premières poulies, on règle la position de la seconde poulie sur le support pour écarter localement la face de contact de la courroie d'entraînement de la partie annulaire du pneumatique à l'aide de la seconde poulie, on dispose des moyens d'acquisition d'images pour acquérir au moins une image d'une zone angulaire de la surface du pneumatique correspondant à la zone dans laquelle la face de contact de la courroie d'entraînement reste à distance du pneumatique, on entraîne en rotation au moins une des poulies pour la mise en rotation de la courroie d'entraînement et du pneumatique, et on réalise l'image de ladite surface du pneumatique.

## Patentansprüche

1. Vorrichtung zum Drehantrieb eines Reifens, welche umfasst:
- einen feststehenden Träger (14; 40),
- einen Antriebsriemen (16), der mit einer Kontaktfläche mit einem ringförmigen Teil des Reifens versehen ist und geeignet ist, einen Drehantrieb des Reifens um seine Achse zu ermöglichen,
- mehrere erste Rollen (18; 42), die an dem Träger (14) angebracht sind und auf der der Kontaktfläche gegenüberliegenden Seite an dem Antriebsriemen anliegend angeordnet sind, um die Kontaktfläche radial an den ringförmigen Teil des Reifens anzudrücken,
**dadurch gekennzeichnet, dass** sie umfasst:
- wenigstens eine zweite Rolle (20; 44), die an der Kontaktfläche des Antriebsriemen anliegend angeordnet ist und translationsbeweglich an dem Träger (14; 40) angebracht ist, um einen Teil der Kontaktfläche lokal von dem ringförmigen Teil des Reifens zu entfernen, während der Rest der Kontaktfläche von den ersten Rollen an den ringförmigen Teil angedrückt wird, und
- Mittel zum Drehantrieb (24; 50) wenigstens einer der Rollen, um den Antriebsriemen in Rotation zu versetzen.

2. Vorrichtung nach Anspruch 1, wobei sich die zweite Rolle (20; 44) in einem Winkelsektor befindet, der von zwei aufeinander folgenden ersten Rollen (18; 42) begrenzt wird.

3. Vorrichtung nach Anspruch 1 oder 2, welche außerdem Mittel zum axialen Halten des Reifens umfasst, die geeignet sind, axial an einem der seitlichen Wülste des Reifens zur Anlage zu kommen.

4. Vorrichtung nach Anspruch 3, wobei der Antriebsriemen einen Auflagerand (16b, 16c) umfasst, der die Kontaktfläche des Riemens radial verlängert und wenigstens teilweise die Mittel zum axialen Halten bildet, wobei dieser Rand geeignet ist, an der Außen- oder Innenfläche des seitlichen Wulstes des Reifens zur Anlage zu kommen.

5. Vorrichtung nach Anspruch 3 oder 4, wobei die Mittel zum axialen Halten wenigstens eine Walze (26) umfassen, die bezüglich des feststehenden Trägers zwischen einer von dem Reifen entfernten und einer an ihn angenäherten Position, in welcher die Walze in der Lage ist, an der Innenfläche des seitlichen Wulstes des Reifens zur Anlage zu kommen, beweglich ist.

6. Vorrichtung nach einem der vorhergehenden Ansprüche, wobei jede Rolle (18, 20; 42, 44) auf einer Welle angebracht ist, deren Achse zur Drehachse des Reifens parallel ist.

7. Vorrichtung nach einem der vorhergehenden Ansprüche, wobei die zweite Rolle (20; 44) auf dem Träger radial translationsbeweglich ist.

8. Vorrichtung nach einem der vorhergehenden Ansprüche, wobei die ersten Rollen (18; 42) translationsbeweglich auf dem Träger angebracht sind.

9. Vorrichtung nach einem der vorhergehenden Ansprüche, wobei eine Außenfläche des Antriebsriemens (16) die Kontaktfläche mit dem Reifen bildet und geeignet ist, radial in Kontakt mit der Bohrung eines der seitlichen Wülste des Reifens zu kommen.

10. Vorrichtung nach Anspruch 9, wobei die zweite Rolle (20) bezüglich der ersten Rollen (18) radial nach innen versetzt ist.

11. Vorrichtung nach Anspruch 9 oder 10, wobei die Außenfläche des Antriebsriemens eine Kegelstumpfform aufweist, die der Form der Bohrung des seitlichen Wulstes des Reifens entspricht.

12. Vorrichtung nach einem der Ansprüche 1 bis 8, wobei eine Innenfläche des Antriebsriemens (16) die Kontaktfläche mit dem Reifen bildet und geeignet ist, radial in Kontakt mit dem Laufstreifen des Reifens zu kommen.

13. Vorrichtung nach Anspruch 12, wobei die zweite Rolle (20) bezüglich der ersten Rollen (18) radial nach außen versetzt ist.

14. Vorrichtung nach Anspruch 12 oder 13, welche Zentriermittel (52) umfasst, die an dem Träger angebracht sind und geeignet sind, radial an der Bohrung einer der seitlichen Wülste des Reifens zur Anlage zu kommen.

15. Verfahren zur Inspektion eines Reifens mithilfe einer Vorrichtung nach einem der Ansprüche 1 bis 14, welches die Schritte umfasst, in welchen die Kontaktfläche des Antriebsriemen mithilfe der ersten Rollen radial an den ringförmigen Teil des Reifens angedrückt wird, die Position der zweiten Rolle an dem Träger eingestellt wird, um die Kontaktfläche des Antriebsriemens mithilfe der zweiten Rolle lokal von dem ringförmigen Teil des Reifens zu entfernen, Mittel zur Erfassung von Bildern angeordnet werden, um wenigstens ein Bild eines Winkelbereichs der Oberfläche des Reifens zu erfassen, der dem Bereich entspricht, in welchem die Kontaktfläche des Antriebsriemens in einem Abstand vom Reifen verbleibt, wenigstens eine der Rollen drehend angetrieben wird, um den Antriebsriemen und den Reifen in Rotation zu versetzen, und das Bild dieser Oberfläche des Reifens hergestellt wird.

## Claims

1. Device for rotating a tyre, comprising:
- a fixed support (14; 40),
- a driving belt (16) that is provided with a contact face for making contact with an annular part of the tyre and is able to allow said tyre to be rotated about its axis,
- a plurality of first pulleys (18; 42) that are mounted on the support (14) and are in abutment with the driving belt on the side away from the contact face in order to press said contact face radially against the annular part of the tyre,
**characterized in that** it comprises:
- at least one second pulley (20; 44) that is in abutment with the contact face of the driving belt and is mounted so as to be able to move in translation on the support (14; 40) in order to locally space a part of said contact face apart from the annular part of the tyre, the rest of the contact face being pressed against said annular part by the first pulleys, and
- means (24; 50) for rotating at least one of the pulleys in order to set the driving belt in rotation.

2. Device according to Claim 1, wherein said second pulley (20; 44) is situated in an angular sector delimited by two successive first pulleys (18; 42).

3. Device according to Claim 1 or 2, which also comprises means for axially holding the tyre that are able to come into axial abutment with one of the lateral beads of said tyre.

4. Device according to Claim 3, wherein the driving belt comprises a bearing lip (16b, 16c) that radially extends the contact face of said belt and at least partially forms the axial holding means, said lip being able to come into abutment with the external face or internal face of said lateral bead of the tyre.

5. Device according to Claim 3 or 4, wherein the axial holding means comprise at least one roller (26) that is able to move with respect to the fixed support between a spaced-apart position and a close position relative to the tyre, in which said roller is able to come into abutment with the internal face of said lateral bead of the tyre.

6. Device according to any one of the preceding claims, wherein each pulley (18, 20; 42, 44) is mounted on a shaft with an axis parallel to the axis of rotation of the tyre.

7. Device according to any one of the preceding claims, wherein said second pulley (20; 44) is able to move radially in translation on the support.

8. Device according to any one of the preceding claims, wherein the first pulleys (18; 42) are mounted so as to be able to move in translation on the support.

9. Device according to any one of the preceding claims, wherein an outer face of the driving belt (16) forms the contact face for making contact with the tyre and is able to come into radial contact with the bore in one of the lateral beads of said tyre.

10. Device according to Claim 9, wherein said second pulley (20) is offset radially towards the inside with respect to the first pulleys (18).

11. Device according to Claim 9 or 10, wherein the outer face of the driving belt has a frustoconical shape matching the shape of the bore in said lateral bead of the tyre.

12. Device according to any one of Claims 1 to 8, wherein an inner face of the driving belt (16) forms the contact face for making contact with the tyre and is able to come into radial contact with the tread of said tyre.

13. Device according to Claim 12, wherein said second pulley (20) is offset radially towards the outside with respect to the first pulleys (18).

14. Device according to Claim 12 or 13, which comprises centring means (52) that are mounted on the support and are able to come into radial abutment with the bore in one of the lateral beads of the tyre.

15. Method for inspecting a tyre with the aid of a device according to any one of Claims 1 to 14, comprising the steps in which the contact face of the driving belt is pressed radially against the annular part of the tyre with the aid of the first pulleys, the position of the second pulley on the support is regulated in order to locally space the contact face of the driving belt apart from the annular part of the tyre with the aid of the second pulley, there are image acquisition means for acquiring at least one image of an angular region of the surface of the tyre corresponding to the region in which the contact face of the driving belt remains at a distance from the tyre, at least one of the pulleys is rotated in order to set the driving belt and the tyre in rotation.
